# EUROPÄISCHE PATENTSCHRIFT

(11) **EP 3 222 776 B1**
(45) Veröffentlichungstag und Bekanntmachung des Hinweises auf die Patenterteilung: **20.01.2021**
(21) Anmeldenummer: 17150740.3
(22) Anmeldetag: 10.01.2017
(51) Int. Cl.: D07B 1/02, A01K 61/54

(54) **MUSCHELZUCHTSEIL**
MUSSEL REARING ROPE
CORDE DE MYTILICULTURE

(30) Priorität: 23.03.2016 DE 102016003439
(43) Veröffentlichungstag der Anmeldung: 27.09.2017
(73) Patentinhaber: Mechanische Netzfabrik Walter Kremmin GmbH & Co. KG, 26135 Oldenburg (DE)
(72) Erfinder: Kremmin, Hannes, 26135 Oldenburg (DE)
(74) Vertreter: Jabbusch, Matthias

(56) Entgegenhaltungen:
- DE-U1-202005 003 291
- FR-A- 1 474 539
- JP-A- 2003 064 541
- NZ-A- 581 049

## Beschreibung

Die Erfindung betrifft ein Muschelzuchtseil, das aus einer Mehrzahl von einzelnen Strängen zusammengesetzt ist, wobei mindestens ein Strang mindestens zum Teil aus einem Material mit einer Dichte von mehr als 2 g / cm³ besteht und eine äußere Umhüllung aufweist, wobei in dem Muschelzuchtseil ein Gewebe mit Kettfäden und überstehenden Schussfäden eingebracht ist.

Ein gattungsgemäßes Muschelzuchtseil ist aus der NZ 581 049 A bekannt. Um dieses Muschelzuchtseil zu beschweren, ist vorgesehen, einen Blei- oder Kupferstrang in das Seil einzufügen, der mit Kunststoff überzogen ist.

Derartige Muschelzuchtseile sind bekannt. Muschelzuchtseile bestehen aus Seilen und Seilgeflechten, die unter Wasser hängen und Vorsprünge und Verästelungen in irgendeiner Form aufweisen, an denen sich Muscheln oder Muschellarven festsetzen können. In der WO 2014/183190 A1 wird beispielsweise ein eher gestricktes oder gewirktes Seil beschrieben. Um derartige Muschelzuchtseile unter Wasser zu halten, werden vielfach Bleistränge in das Muschelzuchtseil eingearbeitet. Es gibt jedoch die Befürchtung, dass dadurch die Qualität der zum Verzehr vorgesehenen Muscheln nachteilig beeinflusst wird. Dies ist beispielsweise in der gattungsgemäßen NZ 592658 A erkannt worden und dort ist vorgeschlagen worden, ein schwereres Material in das Polymermaterial der Seile einzubringen. Hierfür wird ein Metallsalz vorgeschlagen.

Ein anderer Lösungsansatz ist in der EP 2407027 B1 beschrieben. Dort werden unschädliche abgerundete Mineralkörner verwendet, die in einer engverwobenen, röhrenförmigen Textil-Verflechtung aus dünnen Seilen gehalten sind. Um diese erste Textil-Verflechtung herum ist eine weitere röhrenförmige Textil-Verflechtung aus dicken Seilen vorhanden. Insbesondere aus den beiden zuletzt genannten Druckschriften ist auch bekannt, in das Seil ein Geflecht oder Gewebe einzubringen, das nach außen vorstehende Fäden ausbildet, an denen sich die Muscheln festsetzen. Diese sind hier in unterschiedlichen Formen ausgebildet.

Aus der JP 2003 064541 A ist ein Seil bekannt, das für die Fischerei vorgesehen ist. Um ein höheres Gewicht zu erreichen, ist aus dieser Druckschrift bekannt, dass Basalt als Mineralfaser eingesetzt wird.

Ein weiteres Seil, das für maritime Zwecke genutzt werden soll, ist aus der FR 1 474 539 A bekannt. Hier wird eine zentrale Glasfaser vorgesehen, die jeweils in eine Hülle von synthetischen Fasern geschlagen ist. Drei so gebildete Stränge werden zu einem Seil geschlagen. Durch die Glasfaser ist dieses Seil vergleichsweise schwer und sinkfähig.

Der Erfindung liegt die Aufgabe zugrunde, ein Muschelzuchtseil der eingangs genannten Art zu schaffen, das eine neue Möglichkeit eines bleifreien Beschwerungsmittels bereitstellt.

Die Lösung dieser Aufgabe erfolgt mit einem Muschelzuchtseil gemäß dem unabhängigen Anspruch 1, das aus einer Mehrzahl von einzelnen Strängen zusammengesetzt ist, wobei mindestens ein Strang mindestens zum Teil aus einem Material mit einer Dichte von mehr als 2 g / cm³ besteht, wobei erfindungswesentlich vorgesehen ist, dass das Seil mit dem Material mit der Dichte von mehr als 2 g / cm³ im Inneren von anorganischen Fasern gebildet ist und eine äußere Umhüllung aufweist. Mit einem solchen Muschelzuchtseil wird ein beschwertes Muschelzuchtseil geschaffen, das im Wasser absinkt, dabei jedoch kein Blei verwendet und als beschwerendes Material anorganische Fasern verwendet.

Die äußere Umhüllung ist dabei erfindungsgemäß aus einer Umflechtung mit natürlichen oder synthetischen Fasern gebildet, die die anorganischen Fasern zusammenhalten.

Bevorzugt handelt es sich bei den anorganischen Fasern um mineralische Fasern und insbesondere um Fasern aus der Gruppe Basaltfasern, Glasfasern, Kohlestofffasern und Keramikfasern. Dabei kann entweder ein Material oder eine Mischung von Fasern von ein, zwei oder mehreren verschiedenen Faserarten verwendet werden. Besonders bevorzugt werden Basaltfasern verwendet. Diese haben eine Dichte von typischerweise 2,6 bis 2,8 g / cm³. Dies führt im Ergebnis dazu, dass das Muschelzuchtseil, das mindestens zum Teil aus derartigen anorganischen Fasern, insbesondere Basaltfasern, besteht, im Wasser absinkt.

Die anorganischen Fasern, insbesondere die Basaltfasern, werden von Filamenten, insbesondere Basaltfilamenten mit Durchmessern von 1 µm bis 50 µm gebildet. Bevorzugt haben derartige Filamente einen Durchmesser von 11,5 µm bis 19 µm und besonders bevorzugt einen Durchmesser von 13 µm bis 17 µm. Diese Filamente oder Fasern werden zu einem Bündel zusammengefasst, das einen Durchmesser von 0,5 mm bis 10 mm aufweist. Bevorzugt weist dieses Bündel einen Durchmesser von 1 mm bis 6 mm und besonders bevorzugt einen Durchmesser von 2 mm bis 4 mm auf. Die so gebildeten Faserbündel werden dann mit der äußeren Umflechtung versehen, die bevorzugt aus natürlichen oder synthetischen Fasern besteht. Diese haben bevorzugt ein spezifisches Gewicht über 1 g / cm³, so dass die Umflechtung keinen Auftrieb im Wasser erzeugt. Die Umflechtung besteht typischerweise aus 8 bis 48 Litzen, bevorzugt aus 12 bis 32 Litzen und besonders bevorzugt aus 16 bis 24 Litzen. Die Stärke oder der Durchmesser des Umflechtungsmaterials beträgt typischerweise 0,1 mm bis 5 mm, bevorzugt 0,5 mm bis 4 mm und insbesondere 1 mm bis 3 mm.

Die so gebildeten anorganischen Fasern mit Umflechtung können unmittelbar als Strang in dem Muschelzuchtseil eingesetzt werden. Besonders bevorzugt werden diese jedoch noch zu einer geschlagenen Litze weiterverarbeitet. In diesem Zusammenhang wird das oben beschriebene Bündel von Filamenten mit der Umflechtung auch als Kern bezeichnet. Eine geschlagene Litze besteht dann aus einem bis 50 derartig umflochtenen Kernen. Bevorzugt werden drei bis 25 umflochtene Kerne und besonders bevorzugt vier bis 10 umflochtene Kerne zu einer Litze geschlagen. Die so geschlagene Litze bildet dann wiederum einen Strang in dem erfindungsgemäßen Muschelzuchtseil. Eine solche geschlagene Litze hat bevorzugt einen Durchmesser von 4 mm bis 8 mm. Das Verhältnis zwischen dem Litzendurchmesser und den Drehungen der Litzen pro Meter beträgt bevorzugt das Zwei- bis 25-fache, bevorzugt das Drei- bis 18-fache und in einer besonders bevorzugten Ausgestaltung das Vier- bis 15-fache. Bei einem 10-fachen Verhältnis kämen also beispielsweise bei einem typischen Durchmesser der geschlagenen Litze von 50 mm 2 Drehungen auf einem Meter. Unter einem 10-fachen Verhältnis versteht man, dass der Durchmesser mit 10 multipliziert wird, woraus folgt, dass alle 500 mm eine Drehung vorhanden ist. Auf einen Meter kommen demnach 2 Drehungen.

In einer besonders bevorzugten Ausgestaltung ist das Muschelzuchtseil als geschlagenes Seil aus mindestens drei derartig geschlagenen Litzen bzw. dann Strängen ausgebildet. Jede einzelne der geschlagenen Stränge weist dann wiederum mehrere der oben beschriebenen umflochtenen Kerne auf, die dann wiederum in ihrem Inneren die anorganischen Fasern aufweisen. Bevorzugt weist dann ein solches aus Strängen geschlagenes Muschelzuchtseil wiederum einen Kern auf, um den die Stränge herumgeschlagen sind. In typischen Ausführungsformen kann das Muschelzuchtseil mit drei geschlagenen Strängen, vier geschlagenen Strängen oder sechs geschlagenen Strängen ausgebildet sein. Bei Ausführungsformen mit vier und sechs geschlagenen Strängen kann bevorzugt auch ein Kern eingesetzt werden, um den die Stränge herumgeschlagen sind. Dieser Kern ist bevorzugt wieder ein Kern mit Basaltfasern und entspricht daher bevorzugt in der Ausführungsform auch den oben beschriebenen Strängen.

Erfindungsgemäß ist in das geschlagene Muschelzuchtseil ein Gewebe mit Kettfäden und überstehenden Schussfäden eingebracht, insbesondere mit eingeschlagen. An den überstehenden Schussfäden setzten sich dann bevorzugt die Muscheln oder Muschellarven an und bleiben an diesen haften. Das Gewebe weist dabei bevorzugt Kettfäden aus natürlichen oder synthetischen Fasern auf. Der Bereich der Kettfäden hat eine Breite von 2 mm bis 100 mm, bevorzugt von 5 mm bis 50 mm und besonders bevorzugt von 10 mm bis 35 mm. Die überstehenden Schussfäden können ebenfalls aus natürlichen und synthetischen Fasern hergestellt werden und haben typischerweise überstehende Längen von 1 mm bis 300 mm, bevorzugt von 50 mm bis 200 mm und insbesondere von 100 mm bis 200 mm.

In einer besonders bevorzugten Ausführungsform ist in die Schussfäden eine zusätzliche Schussverstärkung eingebracht worden. Dies ist so zu verstehen, dass die Schussfäden in bestimmten Abständen durch ein synthetisches oder metallisches Monofil ergänzt oder ersetzt werden, das gegenüber den übrigen natürlichen oder synthetischen Fasern verstärkt ist. Diese Schussverstärkung ist bevorzugt im Abstand von 5 mm bis 300 mm, insbesondere im Abstand von 15 mm bis 250 mm und besonders bevorzugt im Abstand von 50 mm bis 200 mm eingesetzt. Der Durchmesser dieser Schussverstärkungen beträgt 0,1 mm bis 5 mm, bevorzugt 0,5 mm bis 3 mm und insbesondere 1,1 mm bis 2 mm. Der Überstand beträgt dabei typischerweise 1 mm bis 300 mm, bevorzugt 50 mm bis 250 mm und besonders bevorzugt 100 mm bis 200 mm. Besonders bevorzugt sind diese Schussverstärkungen länger als die übrigen Schussfäden, bevorzugt mehr als 1,5 mal so lang. Insgesamt ergibt sich daraus ein geschlagenes Muschelzuchtseil, das bevorzugt mit drei, vier oder sechs Strängen der oben beschriebenen Art mit den anorganischen Fasern und zusätzlich mit dem eingeschlagenen Gewebe mit den überstehenden Schussfäden ausgebildet ist. Bei Ausführungsformen mit vier oder sechs Strängen kann zusätzlich noch ein innerer Kern vorhanden sein. Der Durchmesser des so gebildeten Seils beträgt typischerweise 3 mm bis 100 mm, bevorzugt 7 mm bis 50 mm, besser 10 mm bis 25 mm und besonders bevorzugt 18 mm bis 20 mm. Das Verhältnis zwischen Seildurchmesser und Drehung pro Meter ist dabei typischerweise zweifach bis 25-fach, bevorzugt vierfach bis 12-fach und in einer besonders bevorzugten Ausgestaltung fünffach bis neunfach. Bei einem Seildurchmesser von 20 mm und einem 15-fachen Verhältnis heißt das, dass 3,3 Umdrehungen pro Meter vorliegen. Nachfolgend wird die Erfindung anhand eines in der Zeichnung dargestellten Ausführungsbeispiels weiter erläutert. Im Einzelnen zeigen die Darstellungen in:
- Figur 1:: einen Querschnitt durch eine erste Ausführungsform eines erfindungsgemäßen Muschelzuchtseils;
- Figur 2:: einen Querschnitt durch eine zweite Ausführungsform eines erfindungsgemäßen Muschelzuchtseils;
- Figur 3:: einen Querschnitt durch eine dritte Ausführungsform eines erfindungsgemäßen Muschelzuchtseils;
- Figur 4:: einen Querschnitt durch eine vierte Ausführungsform eines erfindungsgemäßen Muschelzuchtseils;
- Figur 5:: einen Querschnitt durch eine fünfte Ausführungsform eines erfindungsgemäßen Muschelzuchtseils;
- Figur 6:: einen Querschnitt durch einen Strang des erfindungsgemäßen Muschelzuchtseils;
- Figur 7:: eine Außenansicht des Strangs gemäß Figur 6; und
- Figur 8:: eine Außenansicht eines alternativen Strangs des Muschelzuchtseils, der aus mehreren Strängen gemäß Figur 6 besteht;
- Figur 9:: eine perspektivische Ansicht des Muschelzuchtseils und
- Figur 10:: ein Querschnitt durch ein Muschelzuchtseil gemäß Figur 9.

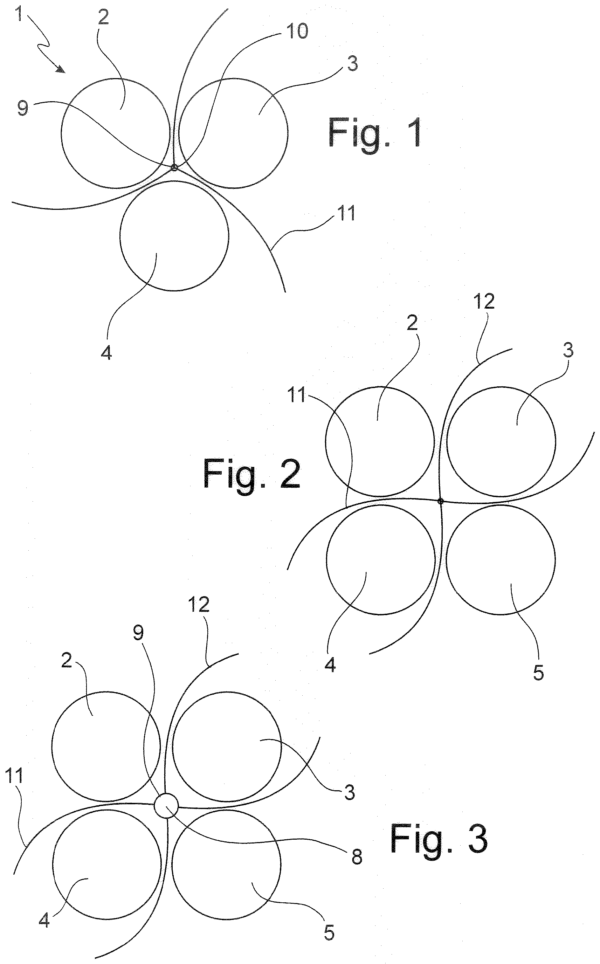

In Figur 1 ist ein Querschnitt durch ein Muschelzuchtseil 1 dargestellt. Das Muschelzuchtseil 1 ist aus drei Strängen 2, 3, 4 geschlagen. Bei derartig geschlagenen Seilen wird teilweise auch von Litzen gesprochen. Die Stränge 2, 3, 4 sind hier gemeinsam mit einem Gewebe 9 zu dem Muschelzuchtseil 1 geschlagen. Das Gewebe 9 besteht bevorzugt aus einem Polypropylengewebe, das aus gestanzten Folien hergestellt ist. Das Gewebe 9 ist in Achsrichtung des Muschelzuchtseils 1 mit Kettfäden aus natürlichen oder synthetischen Fasern, bevorzugt aus Polypropylen, hergestellt. In Querrichtung sind Schussfäden 11 ebenfalls aus den natürlichen oder synthetischen Fasern, bevorzugt aus Polypropylen hergestellt. Diese Schussfäden 11 haben eine Länge bzw. bilden eine Breite des Muschelzuchtseils 1 von 12 cm bis 14 cm aus. Zur Verstärkung dieser Schussfäden 11 ist in gewissen Abständen eine Schussverstärkung 12 vorgesehen, die aus einem festeren Material als die übrigen Schussfäden ausgebildet ist. Dies kann ein Nylonfaden oder Kevlar-Faden oder auch ein metallisches Monofil sein.

In Figur 2 ist ein Querschnitt durch eine zweite Ausführungsform des erfindungsgemäßen Muschelzuchtseils 1 dargestellt. Im Unterschied zur Figur 1 bilden hier vier Stränge 2, 3, 4, 5, gemeinsam mit dem Gewebe 9 das geschlagene Muschelzuchtseil 1 aus.

In Figur 3 ist eine weitere Ausführungsform dargestellt. In dieser sind ebenfalls vier Stränge 2, 3, 4, 5 mit dem Gewebe 9 zu einem Muschelzuchtseil 1 geschlagen. Im Unterschied zur Ausführungsform gemäß Figur 2 ist hier jedoch noch ein zentraler Kern 8 vorhanden, um den die Stränge 2, 3, 4, 5 geschlagen sind.

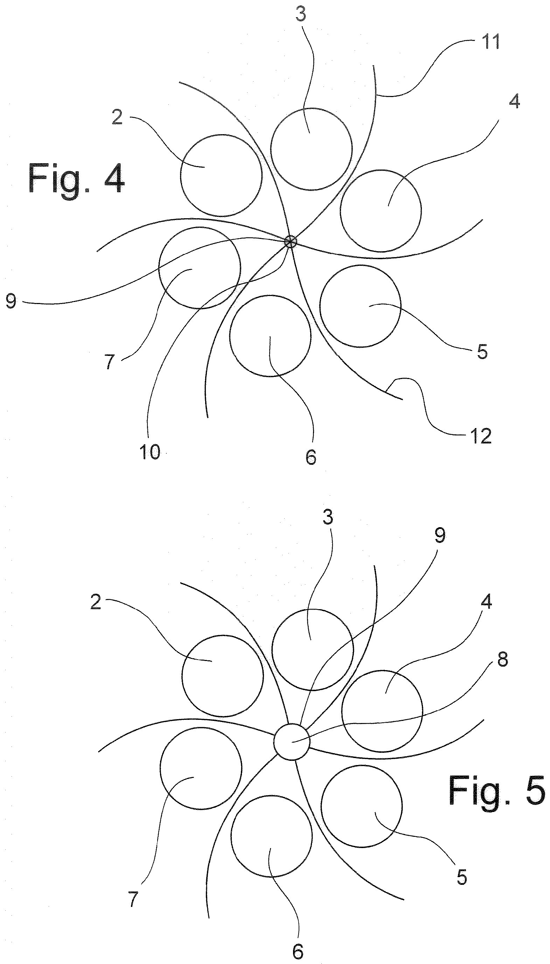

In der Ausführungsform gemäß Figur 4 ist das erfindungsgemäße Muschelzuchtseil 1 aus insgesamt sechs Strängen 2, 3, 4, 5, 6, 7 geschlagen. In dem Muschelzuchtseil 1 ist neben den Strängen 2, 3, 4, 5, 6, 7 auch ein Gewebe 9 eingeschlagen, dessen Schussfäden 11 und die Schussverstärkungen 12 nach außen abstehen.

In Figur 5 ist eine weitere Ausführungsform des erfindungsgemäßen Muschelzuchtseils 1 dargestellt, die sich von der Ausführungsform gemäß Figur 4 dadurch unterscheidet, dass neben den sechs Strängen 2, 3, 4, 5, 6, 7 und dem Gewebe 9 hier auch ein Kern 8 in dem Muschelzuchtseil vorhanden ist, um den die Stränge 2, 3, 4, 5, 6, 7 herumgeschlagen sind.

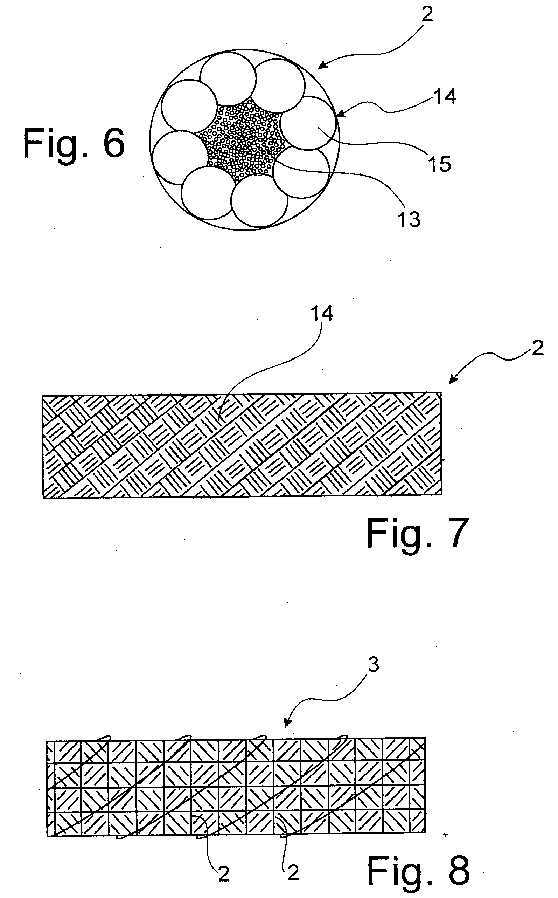

In Figur 6 ist ein Querschnitt durch einen einzelnen Strang, z. B. den Strang 2 oder durch zumindest einen Teil dieses Stranges dargestellt. Der einzelne Strang 2 weist im Inneren anorganische Fasern 13, insbesondere Basaltfasern auf. Diese Fasern oder Filamente haben Durchmesser im Mikrometerbereich. Daher ist hier ein ganzes Bündel von derartigen Fasern oder Filamenten zusammengefasst, das insofern einen Durchmesser von mehreren Millimetern hat und von einer Umflechtung 14 aus einzelnen Litzen 15 umgeben ist. Diese Umflechtung 14 hält das Bündel von anorganischen Fasern 13 zusammen und verhindert deren Austritt.

In Figur 7 ist dieser Strang 2 in einer Außenansicht dargestellt. Insbesondere ist hier die Umflechtung 14 zu sehen, die hier kreuzweise verläuft. Das Muschelzuchtseil 1 weist mindestens einen derartig gestalteten Strang 2 auf, der im Inneren derartige anorganische Fasern 13 aufweist. Bevorzugt sind sämtliche Stränge 2, 3, 4, 5, 6, 7 des Muschelzuchtseils 1 aus derartigen Strängen 2 mit im Inneren angeordneten anorganischen Fasern 13 ausgebildet. Im Einzelfall können jedoch auch eine oder mehrere dieser Stränge konventionell aus anderen Fasern, beispielsweise aus Polyester oder Polypropylen gebildet sein. Die Umflechtung 14 ist bevorzugt aus Polyester, da dieses Material vergleichsweise schwer ist und im Wasser absinkt.

In Figur 8 ist ein geschlagener Strang 3 dargestellt, der aus einem oder mehreren umflochtenen Strängen oder Kernen ausgebildet ist, so wie sie in Figur 6 dargestellt sind. Bevorzugt wird nämlich der in Figur 6 dargestellte Strang 2 nicht direkt als Strang in einem Muschelzuchtseil 1 gemäß einer Ausführungsform der Figuren 1 bis 5, oder einer anderen Variante eingesetzt, sondern es werden, so wie in Figur 8 dargestellt, Stränge oder geschlagene Litzen aus einer Vielzahl der Stränge 2 gemäß Figur 6 hergestellt. Insbesondere werden hierfür drei bis 25, noch besser vier bis 10 derartige Stränge 2 gemäß Figur 6 verwendet. Diese werden miteinander verdreht. Das Verhältnis zwischen dem Litzendurchmesser und Drehung pro Meter beträgt dabei bevorzugt vier bis 15.

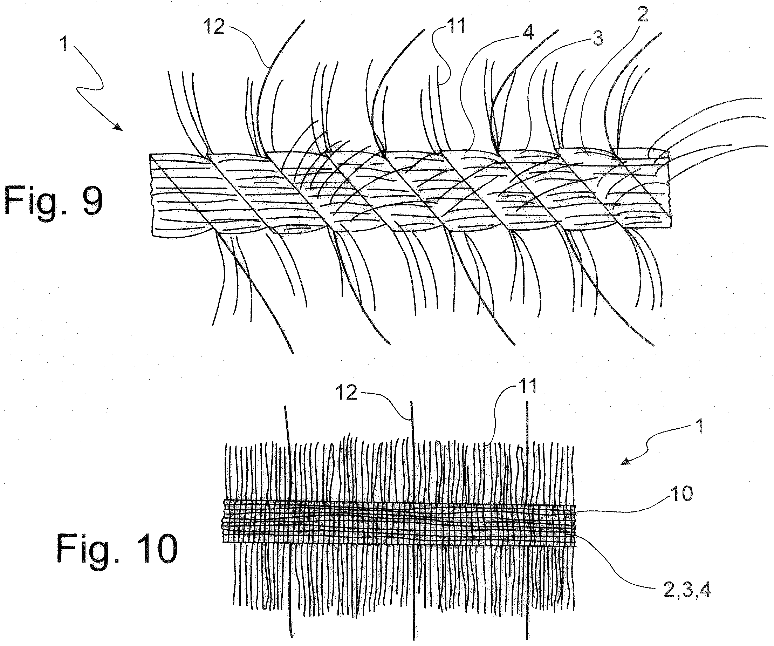

In Figur 9 ist ein Muschelzuchtseil 1 in einer perspektivischen Ansicht dargestellt. Das Muschelzuchtseil 1 ist im zentralen Bereich aus drei Strängen 2, 3, 4 geschlagen. Weiterhin ist hier ein Gewebe 9 mit Schussfäden 11 und Schussverstärkungen 12 eingeschlagen, die über die Stränge 2, 3, 4 des Muschelzuchtseils hinausstehen. Die Zahl der Schussfäden 11 ist wesentlich höher als die Zahl der Schussverstärkungen 12. Die Schussverstärkungen 12 sind dicker und fester als die Schussfäden 11 und zudem auch länger als die Schussfäden 11.

In Figur 10 ist noch ein Querschnitt durch das Muschelzuchtseil 1 gemäß Figur 9 dargestellt. In dem Querschnitt ist der zentrale Bereich, der aus den Strängen 2, 3, 4 gebildet ist, in der Mitte der Darstellung zu erkennen. In diesem Bereich verläuft das Gewebe mit den in der Figur horizontal ausgerichteten Kettfäden 10. Aus diesen heraus sind zu den Seiten die Schussfäden 11 und die Schussverstärkungen 12 ausgerichtet. Die Schussverstärkungen 12 sind als durchgehende Schussverstärkungen ausgebildet, die sich von einer Seite des Muschelzuchtseils 1 durch die Kettfäden 10 des Gewebes 9 hindurch zur anderen Seite des Muschelzuchtseils 1 erstrecken.

## Patentansprüche

1. Muschelzuchtseil (1), das aus einer Mehrzahl von einzelnen Strängen (2, 3, 4, 5, 6, 7) zusammengesetzt ist, wobei mindestens ein Strang (2, 3, 4, 5, 6, 7) mindestens zum Teil aus einem Material mit einer Dichte von mehr als 2 g / cm³ besteht und eine äußere Umhüllung aufweist, wobei in dem Muschelzuchtseil (1) ein Gewebe (9) mit Kettfäden (10) und überstehenden Schussfäden (11) eingebracht ist.
**dadurch gekennzeichnet,**
**dass** der Strang (2, 3, 4, 5, 6, 7) mit dem Material mit der Dichte von mehr als 2 g / cm³ im Inneren von anorganischen Fasern (13) gebildet ist und
**dass** die äußere Umhüllung als die anorganischen Fasern (13) umschließende Umflechtung (14), die kreuzweise verläuft, ausgebildet ist.

2. Muschelzuchtseil nach Anspruch 1, **dadurch gekennzeichnet, dass** die anorganischen Fasern (13) aus der Gruppe Glasfasern, Basaltfasern, Kohlestofffasern und Keramikfasern ausgewählt sind.

3. Muschelzuchtseil nach einem der Ansprüche 1 oder 2, **dadurch gekennzeichnet, dass** die anorganischen Fasern (13) aus einzelnen Filamenten gebildet sind, die ein Faserbündel mit einem Durchmesser von 2 mm bis 4 mm ausbilden.

4. Muschelzuchtseil nach einem der vorhergehenden Ansprüche, **dadurch gekennzeichnet, dass** die Umflechtung (14) aus 12 bis 32 Litzen gebildet ist.

5. Muschelzuchtseil nach einem der vorhergehenden Ansprüche, **dadurch gekennzeichnet, dass** das Muschelzuchtseil (1) als geschlagenes Seil mit mindestens drei Strängen (2, 3, 4) ausgebildet ist.

6. Muschelzuchtseil nach einem der vorhergehenden Ansprüche, **dadurch gekennzeichnet, dass** die anorganischen Fasern (13) mit der äußeren Umflechtung einen umflochtenen Kern bilden und mit drei bis 25 weiteren derartigen Kernen einen geschlagenen Strang ausbildet.

7. Muschelzuchtseil nach Anspruch 5 oder 6, **dadurch gekennzeichnet, dass** das aus Strängen (2, 3, 4, 5, 6, 7) geschlagene Muschelzuchtseil (1) einen Kern (8) aufweist.

8. Muschelzuchtseil nach einem der vorhergehenden Ansprüche, **dadurch gekennzeichnet, dass** in dem Gewebe (9) neben Schussfäden (11) auch Schussverstärkungen (12) vorhanden sind, die aus einem gegenüber den Schussfäden (11) festeren Material ausgebildet sind.

9. Muschelzuchtseil nach Anspruch 8, **dadurch gekennzeichnet, dass** die Schussverstärkungen (12) über die Schussfäden (11) hinausstehen.

## Claims

1. A mussel rearing rope (1), which is composed of a plurality of individual strands (2, 3, 4, 5, 6, 7), at least one strand (2, 3, 4, 5, 6, 7) consisting at least partially of a material with a density of more than 2 g / cm³ and having an outer sheath, a woven fabric (9) having warp threads (10) and protruding weft threads (11) being introduced into the mussel rearing rope (1),
**characterised in that**
the strand (2, 3, 4, 5, 6, 7) having the material with the density of more than 2 g / cm³ is formed in the interior by inorganic fibres (13), and
the outer sheath is designed as braiding (14) which encloses the inorganic fibres (13) and runs crosswise.

2. The mussel rearing rope according to Claim 1, **characterised in that** the inorganic fibres (13) are selected from the group glass fibres, basalt fibres, carbon fibres and ceramic fibres.

3. The mussel rearing rope according to one of Claims 1 or 2, **characterised in that** the inorganic fibres (13) are formed from individual filaments which form a fibre bundle having a diameter of 2 mm to 4 mm.

4. The mussel rearing rope according to any one of the preceding claims, **characterised in that** the braiding (14) is formed from 12 to 32 cords.

5. The mussel rearing rope according to any one of the preceding claims, **characterised in that** the mussel rearing rope (1) is in the form of a laid rope with at least three strands (2, 3, 4).

6. The mussel rearing rope according to any one of the preceding claims, **characterised in that** the inorganic fibres (13) together with the outer braiding form a braiding-surrounded core, and a laid strand is formed using three to 25 further cores of this type.

7. The mussel rearing rope according to Claim 5 or 6, **characterised in that** the mussel rearing rope (1) laid from strands (2, 3, 4, 5, 6, 7) has a core (8).

8. The mussel rearing rope according to any one of the preceding claims, **characterised in that** in addition to weft threads (11), there are in the woven fabric (9) weft reinforcements (12), which are formed from a stronger material than the weft threads (11).

9. The mussel rearing rope according to Claim 8, **characterised in that** the weft reinforcements (12) protrude beyond the weft threads (11).

## Revendications

1. Corde d'élevage pour mytiliculture (1), qui se compose d'une multiplicité d'écheveaux (2, 3, 4, 5, 6, 7) individuels, au moins un écheveau (2, 3, 4, 5, 6, 7) étant constitué au moins en partie d'une matière présentant une densité de plus de 2 g / cm³ et comportant une enveloppe extérieure, dans la corde d'élevage pour mytiliculture (1) étant incorporé un tissu (9) pourvu de fils de chaîne (10) et de fils de trame (11) saillants,
**caractérisée**
**en ce que** l'écheveau (2, 3, 4, 5, 6, 7) de matière d'une densité de plus de 2 g / cm³ est créé à l'intérieur de fibres (13) inorganiques et
**en ce que** l'enveloppe extérieure est conçue sous la forme d'une tresse (14) entourant les fibres (13) inorganiques, qui s'écoule en croix.

2. Corde d'élevage pour mytiliculture selon la revendication 1, **caractérisée en ce que** les fibres (13) inorganiques sont choisies dans le groupe comprenant les fibres de verre, les fibres de basalte, les fibres de carbone et les fibres de céramique.

3. Corde d'élevage pour mytiliculture selon l'une quelconque des revendications 1 ou 2, **caractérisée en ce que** les fibres (13) inorganiques sont formées en filaments individuels qui constituent un faisceau de fibres d'un diamètre de 2 mm à 4 mm.

4. Corde d'élevage pour mytiliculture selon l'une quelconque des revendications précédentes, **caractérisée en ce que** la tresse (14) est formée de 12 à 32 torons.

5. Corde d'élevage pour mytiliculture selon l'une quelconque des revendications précédentes, **caractérisée en ce que** la corde d'élevage pour mytiliculture (1) est conçue sous la forme d'une corde toronnée pourvue d'au moins trois écheveaux (2, 3, 4).

6. Corde d'élevage pour mytiliculture selon l'une quelconque des revendications précédentes, **caractérisée en ce que** les fibres (13) inorganiques forment avec la tresse extérieure un cœur tressé et constituent avec de trois à 25 autres cœurs de ce type un écheveau toronné.

7. Corde d'élevage pour mytiliculture selon la revendication 5 ou 6, **caractérisée en ce que** la corde d'élevage pour mytiliculture (1) toronnée à partir d'écheveaux (2, 3, 4, 5, 6, 7) comporte un cœur (8).

8. Corde d'élevage pour mytiliculture selon l'une quelconque des revendications précédentes, **caractérisée en ce que** dans le tissu (9) sont présents hormis des fils de trame (11) également des renforts de trame (12) qui sont conçus en des matières plus solides que les fils de trame (11).

9. Corde d'élevage pour mytiliculture selon la revendication 8, **caractérisée en ce que** les renforts de trame (12) saillent par-dessus les fils de trame (11) .
